(19) Europäisches Patentamt
European Patent Office
Office européen des brevets

(11) Publication number: 0 042 826
B1

(12) **EUROPEAN PATENT SPECIFICATION**

(45) Date of publication of patent specification: 08.08.84

(51) Int. Cl.³: C 08 F 2/24, C 08 F 14/06

(21) Application number: 81850090.2

(22) Date of filing: 25.05.81

# (54) Dispersions of solid organic compounds.

(30) Priority: 10.06.80 SE 8004332

(43) Date of publication of application:
30.12.81 Bulletin 81/52

(45) Publication of the grant of the patent:
08.08.84 Bulletin 84/32

(84) Designated Contracting States:
AT BE CH DE FR GB IT LI NL

(56) References cited:
DE - A - 1 809 573

(73) Proprietor: KenoGard AB
Box 11033
S-100 61 Stockholm (SE)

(72) Inventor: Lundin, Claes Olof Axel
Tryffelvägen 11
S-132 00 Saltsjö-Boo (SE)
Inventor: Simonsson, Berit Ingegärd
Sämjevägen 56
S-162 24 Vällingby (SE)

(74) Representative: Schöld, Zaid
c/o KemaNobel AB Patents Box 11065
S-100 61 Stockholm (SE)

EP 0 042 826 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to aqueous dispersions of solid, monomer-soluble free-radical initiators. More particularly the invention relates to such dispersions which contain an amphoteric derivative of a 2-alkyl or 2-alkenyl substituted 2-imidazoline as emulsifier. The invention also relates to the use of such dispersions for the polymerization of ethylenically unsaturated monomers.

As solid, monomer-soluble, free-radical initiators for the polymerization of ethylenically unsaturated monomers can be used for example organic peroxides such as aromatic and aliphatic diacyl peroxides, diaralkyl peroxides and dialkyl peroxydicarbonates, mixed anhydrides of organic sulphoperacids and organic acids, and also azo compounds. It is of course possible to charge initiators of this type to the polymerization system in solid form or dissolved in organic solvents. However, these methods of charging are not satisfactory with respect to handling and occupational environment and the development has therefore, in the last few years, been centred on the preparation of aqueous dispersions of initiators, which dispersions can be used in closed systems.

Different types of emulsifiers and different emulsifier combinations have been used for the preparation of dispersions of solid initiators. US Patent Specification No. 3,825,509 describes emulsions prepared with a nonionic emulsifier and according to the US Patent Specification No. 4,039,475 a combination of two nonionic emulsifiers, or alternatively a combination of one nonionic and one anionic emulsifier, is used. It is also known to use different anionic and also cationic emulsifiers for initiator dispersions, as described in the German Patent Application 26 29 467.

The dispersions mentioned above have varying degrees of stability and most of them do not give stable initiator dispersions, but only dispersions which are pumpable or which are stable only for a shorter period of time. Another disadvantage of hereto known dispersions is that the emulsifiers used, to a varying extent, often impair essential properties of the produced polymerizates such as electric properties, particle size distribution and bulk density. Furthermore, many of the suggested emulsifiers will have a negative effect on the emulsifiers and protective colloids which are most commonly used for polymerization so that it will not be possible to use conventional polymerization recipes without modifications or without impairing the properties of the polymerizate when using dispersions of initiators.

It has now been found that certain amphoteric emulsifiers give dispersions of solid, monomer-soluble, free-radical forming initiators, which dispersions are stable on storage and easy to handle. When used for the polymerization of ethylenically unsaturated monomers, such as e.g. vinyl chloride, they do not give rise to any appreciable negative effects on the properties of the produced polymerizates and neither do they seem to have any considerable influence on the conventionally used protective colloids or emulsifiers and modifications of the polymerization recipes can thus be avoided when the present dispersions are used.

The present invention thus relates to aqueous emulsifier-containing dispersions of solid, monomer-soluble, free-radical forming compounds, wherein the emulsifier is an amphoteric derivative of a 2-alkyl substituted or 2-alkenyl substituted 2-imidazoline.

The dispersions according to the invention contain solid oil-soluble radical initiators and these initiators can be solid organic peroxides, mixed anhydrides of organic sulphoperacids and organic acids, or azo compounds. Known azo compounds for initiation of polymerization are e.g. azovaleronitrile and azobisisobutyronitrile. Dispersions of solid organic peroxides are preferred and hereby is understood peroxides which are solid and stable at a temperature of about 20°C. As examples of groups of such peroxides can be mentioned aromatic and aliphatic diacyl peroxides, e.g. dibenzoyl peroxide and dilauryl peroxide, dialkyl and diaralkyl peroxides, e.g. dicumyl peroxide, hydroperoxides, peresters, perketals, ketonperoxides, peroxydicarbonates. Particularly preferred are solid dialkyl peroxydicarbonates and as examples of such can be mentioned dimyristyl-, dicetyl-, distearyl-, dicyclohexyl- and di-4-tert.butyl-cyclohexyl peroxydicarbonates.

The dispersions according to the invention may have high solid contents of the initiator, up to about 40 per cent by weight, and the solid content suitably exceeds 15 per cent by weight. The amount of emulsifier in the dispersions should be at least 1 per cent by weight based on the amount of initiator and it should generally not exceed 15 per cent by weight, and preferably not 10 per cent by weight, as it has been found that the viscosity of the dispersions might otherwise be negatively affected. Protective colloids and thickening agents may of course also be present in the dispersions.

The dispersions of the invention contain amphoteric emulsifiers based on 2-imidazoline. The emulsifiers contain an organic hydrophobic group in 2-position. This group is an alkyl or alkenyl group and it suitably contains at least 7 carbon atoms. The group should have hydrophobic properties and the upper limit for the number of carbon atoms is thus not critical, it is, however, preferred that the number does not exceed 23. The hydrophobic alkyl or alkenyl group suitably contains 7 to 17 carbon atoms and preferably 9 to 15. As examples of suitable hydrophobic groups can be mentioned heptyl, octyl, nonyl, undecyl, dodecyl, pentadecyl heptadecyl and nonadecyl groups and the corresponding unsaturated groups.

Amphoteric derivatives of 2-alkyl substituted or 2-alkenyl substituted 2-imidazoline are well-known and comprise the groups mono- and di-carboxylates and mono-sulphonates, wherein the carboxylates or sulphonate groups are in 1-position.

The emulsifiers can be characterized by the general formula

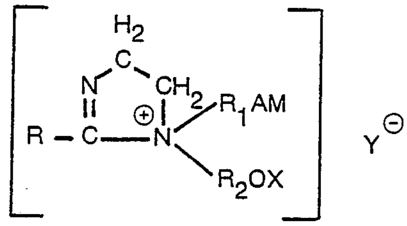

wherein R is the hydrophobic alkyl- or alkenyl group. This group can contain inert substituents which do not influence the hydrophobic properties, or the other properties of the emulsifiers, to any considerable extent. As examples of such groups can be mentioned ether-bridges and amide groups.

In the general formula A is a carboxylate group or a sulphonate group. M is preferably hydrogen or an alkali metal ion, suitably sodium ion, but can also be an ammonium ion or an alkanol amine. X has the same meaning as M but can also be the group $R_3COOM$ when A is a carboxylate group. Y is an anion, e.g. a hydroxyl-group or a halogen such as chlorine. Y is suitably a hydroxyl group or an alkyl- or alkarylsulphate group, wherein the respective alkyl groups contain 1 to 18 carbon atoms, suitably 6 to 18 carbon atoms. A hydroxyl group is preferred as anion. The carboxylate groups and the sulphonate groups can be ionized or in salt form, and this is of course dependent on the pH. $R_1$, $R_2$ and $R_3$ are all, independent of each other, aliphatic hydrocarbon groups having 1 to 4 carbon atoms, and the groups can be substituted or unsubstituted. When one or several of $R_1$, $R_2$ and $R_3$ are substituted they are preferably hydroxy-substituted hydrocarbon groups with 1 to 4 carbon atoms. Other substituted groups $R_1$, $R_2$ and $R_3$ which can be present in the amphoteric derivatives are aliphatic hydrocarbon groups with 2 to 4 carbon atoms and containing an ether-bridge or a keto-group and these can also contain a hydroxy-substituent. The following are some examples of the groups $R_1$, $R_2$ and $R_3$: $—CH_2—$, $—C_2H_4—$, $—C_3H_6—$, $—C_4H_8—$, $—CH_2CH(OH)CH_2—$, $—CH_2CH(OH)CH(OH)CH_2—$, $—C_2H_4OC_2H_4—$, $—CH_2CH(OH)OC_2H_4—$.

According to the present invention it has been found that these amphoteric emulsifiers give aqueous dispersions of solid, monomer-soluble, free-radical forming compounds, which dispersions are stable on storage and easy to handle. The dispersions do not give rise to any appreciable negative effects on the properties of polymerizates produced with the dispersions. They do neither seem to have any essential effect on the in polymerization conventionally used chemicals.

The dispersions according to the invention should have a comparatively low viscosity and thereby be easy to handle. The viscosity should not exceed 1000 mPa·s (measured with a Brookfield viscosimeter RVT, spindle 3, 100 r.p.m., at a temperature of 20°C) and the viscosity is generally below 150 mPa·s. The dispersions are very stable and this means that the viscosity of the dispersions does not increase substantially during a longer period of storing. Neither do the dispersions, after a longer period of storing, show phase-separation of such a kind that they cannot be used for polymerization.

It is suitable to incorporate substances which function as thickeners and/or protective colloids in the dispersions, in order to prevent that the initiators in the aqueous dispersions can no longer be homogeneously distributed in the continuous phase, should phase-separation have occurred. These substances are preferably incorporated in most cases, and in such amounts as to prevent phase-separation to the greatest possible extent.

Examples of substances which are suitable for this purpose are synthetic and natural polymers such as polyvinyl alcohol, which may be partially hydrolyzed, polyvinylpyrrolidone, polyacrylic acid and acrylic acid-copolymerizates with acrylic amide or acrylic esters, water-soluble cellulose derivatives such as hydroxyethyl and hydroxypropyl cellulose, methyl cellulose and carboxymethyl cellulose, gelatin, starch etc. The amount of protective colloid is chosen with respect to the desired viscosity of the dispersion, with respect to the emulsifier and the initiator. The amount is suitably within the range of 0.05 to 10 per cent by weight based on the dispersion, and preferably within the range 0.2 to 5 per cent by weight. Polyvinyl alcohol or water-soluble cellulose derivatives are preferably used.

The dispersions of the invention are prepared in a known manner by mixing and homogenizing the components by means of known equipment, such as colloid mills, pressure homogenizers, ball mills, ultrasonic homogenizers etc. As peroxides are susceptible to higher temperatures, the temperature at mixing and homogenizing these should not exceed 20°C in order to avoid decomposition.

The invention also relates to the use of aqueous dispersions of solid, monomer-soluble free-radical-forming initiators which dispersions as emulsifier contains amphoteric imidazoline derivatives, as defined above, for the polymerization of ethylenically unsaturated monomers in aqueous systems according to conventional polymerization methods utilizing monomer-soluble initiators.

As examples of ethylenically unsaturated polymerizable compounds can be mentioned: vinyl aromatic compounds, e.g. styrene and substituted styrenes such as p-chlorostyrene, esters of aliphatic

alpha-methylene carbonic acids, preferably lower alkyl esters, e.g. methylacrylate, ethylacrylate, methyl methacrylate, ethyl methacrylate, acrylic acid nitrile, vinyl esters, e.g. vinyl acetate, vinyl halides, e.g. vinyl chloride, vinyl ethers, e.g. vinyl methyl ether, vinylidene chloride and lower alkenes, e.g. butene. The present dispersions are preferably used at polymerization of vinyl chloride, or vinyl chloride and up to 20 per cent by weight, based on the vinyl chloride, of copolymerizable monomers, such as alkenes, vinyl acetate, vinylidene chloride, acrylic and methacrylic acids, acrylates and methacrylates, acryl nitrile and methacryl nitrile, vinyl esters etc., by known suspension and micro-suspension polymerization methods.

For polymerization using the initiator dispersions the amount of initiator is calculated in the same manner as for polymerization using solid initiators which are not in the form of dispersions, and this means that the amount of initiator generally is within the range of 0.01 to 2 per cent by weight, based on the amount of monomer. In polymerization with the present dispersions conventionally used polymerization recipes and other polymerization agents can be used in accustomed amounts.

The invention is further illustrated in the following examples which, however, are not intended to limit the same. Parts and per cent relate to parts by weight and per cent by weight, respectively, unless otherwise stated.

Example 1a)-e)

Five different dispersions, 1a-1e, were prepared according to the following: To water solutions, containing protective colloid and emulsifier, solid initiators in powder form were added. The mixtures were dispersed by means of an Ultraturrax® at 10000 r.p.m., and were then homogenized by means of an Ultrasonic homogenizer at a temperature of about 20°C and a pressure of about 1000 kPa.

The viscosity of the dispersions was measured with a Brookfield viscosimeter, type RVT, measuring spindle 3, at 100 r.p.m.

The emulsifiers in the dispersions 1a-1e had the general formula

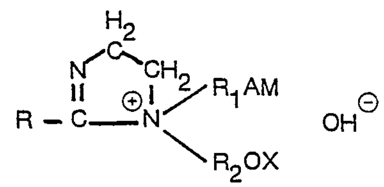

the substituents being:

| | R | $R_1$ | $R_2$ | A | M | X |
|---|---|---|---|---|---|---|
| 1a) | $C_{11}H_{23}$ | $CH_2CH(OH)CH_2$ | $CH_2CH_2$ | $SO_3$ | Na | H |
| 1b) | $C_{17}H_{35}$ | " | " | " | " | " |
| 1c) | $C_{11}H_{23}$ | $CH_2CH_2OCH_2$ | $CH_2$ | $COO^-$ | Na | $CH_2COONa$ |
| 1d) | $C_7H_{15}$ | " | " | " | " | " |
| 1e) | $C_{11}H_{23}$ | $CH_2CH(OH)CH_2$ | $CH_2CH_2$ | $SO_3$ | Na | H |

The other components, used amounts and measured viscosity of the dispersions are shown in the Table below. Amounts given in per cent relate to per cent by weight based on the entire dispersion.

| Dispersion | Initiator | Amount % | Protective colloid | Amount % | Emulsifier amount % | Viscosity mPa·s |
|---|---|---|---|---|---|---|
| 1a | Dicetyl peroxydi-carbonate | 25 | Polyvinyl-alcohol | 0.8 | 0.6 | 60 |
| 1b | " | 20 | Hydroxy-propyl methylcel-lulose | 0.3 | 0.5 | 80 |
| 1c | " | 20 | " | 0.5 | 0.5 | 45 |
| 1d | " | 20 | Ethylhydroxy ethyl-cellulose | 0.5 | 0.7 | 60 |
| 1e | Lauryl-peroxide | 30 | Hydroxy-propyl methylcel-lulose | 0.6 | 0.7 | 40 |

Example 2

The dispersions of example 1a) and 1c) were used in the production of polyvinyl chloride.

6300 g of water, 5 g of sorbitan monolaurate, 4 g of hydroxypropyl methylcellulose and initiator dispersion in an amount corresponding to 3.0 g of dry initiator were charged to a 15 l steel reactor. The agitation speed in the system was 415 r/min. and the temperature was 40°C. 5500 g of vinyl chloride were charged after evacuation and the system was heated to 55°C. The polymerisation was stopped after about 8 hours when the pressure was 500 kPa. Unreacted vinyl chloride was blown off and the polymerizate was dewatered and dried.

As a comparison the corresponding polymerization was carried out but with use of 3.0 g dicetyl peroxydicarbonate charged in solid form. In the Tables below polymerizate produced with dispersion 1a is marked A, polymerizate produced with dispersion 1c is marked B and polymerizate produced with solid initiator is marked C.

Bulk density and volume resistivity were determined for the produced polymerizates and the particle size distribution was determined by sieve analysis. The volume resistivity was determined according to the following:

200 g of the produced polymerizates were mixed with 16 g of tribasic lead sulphate and 100 g of dioctyl phthalate. The mixtures were rolled to a fell for 10 minutes and then pressed to plates at 160°C and conditioned on a water bath at 23°C for 4 hours. The volume resistivity was then measured by means of a Radiometer IM6 megohm-meter.

The results are shown in the Tables below.

| Polymerizate | Sieve analysis g/kg | | | | | | |
|---|---|---|---|---|---|---|---|
| | >315 μ | 250—315 μ | 200—250 μ | 160—200 μ | 100—160 μ | 63—100 μ | 63 μ |
| A | 6 | 4 | 18 | 115 | 718 | 123 | 21 |
| B | 4 | 3 | 10 | 82 | 706 | 170 | 35 |
| C | 5 | 3 | 7 | 93 | 685 | 190 | 38 |

| Polymerizate | Bulk density kg/l | Volume resistivity x $10^{10}$ ohm·m |
|---|---|---|
| A | 500 | 58 |
| B | 530 | 63 |
| C | 505 | 75 |

**Claims**

1. Aqueous emulsifier-containing dispersion of a solid, monomer-soluble free-radical forming compound, characterized in that the emulsifier is an amphoteric derivative of a 2-alkyl substituted or 2-alkenyl substituted 2-imidazoline, whereby the 2-alkyl or 2-alkenyl substituent is hydrophobic and the derivative is a 1-monocarboxylate, a 1,1-dicarboxylate or a 1-monosulphonate.

2. Dispersion according to claim 1, characterized in that the 2-alkyl or 2-alkenyl substituent contains 7 to 23 carbon atoms.

3. Dispersion according to claim 1 or 2, characterized in that the emulsifier is present in the dispersion in an amount of at least 1 per cent by weight, based on the free-radical forming compound.

4. Dispersion according to any of the preceding claims, characterized in that it also contains 0.05 to 10 per cent by weight of a thickener.

5. Dispersion according to any of the preceding claims, characterized in that the solid, monomer-soluble free-radical forming compound is an organic peroxide.

6. Dispersion according to claim 5, characterized in that the solid, monomer-soluble, free-radical forming compound is a peroxy dicarbonate.

7. Use of an aqueous emulsifier-containing dispersion of a solid, monomer-soluble free-radical forming compound, which dispersion contains an amphoteric derivative of a 2-alkyl or 2-alkenyl substituted 2-imidazoline whereby the 2-alkyl or 2-alkenyl substituent is hydrophobic and the derivative is a 1-monocarboxylate, a 1,1-dicarboxylate or a 1-monosulphonate, as emulsifier, for the polymerization of ethylenically unsaturated monomers in aqueous systems.

**Patentansprüche**

1. Wässrige, Emulgator enthaltende Dispersion einer festen monomerlöslichen, freie Radikale bildenden Verbindung, dadurch gekennzeichnet, dass der Emulgator ein amphoteres Derivat eines 2-alkyl-substituierten oder 2-alkenyl-substituierten 2-Imidazolins ist, wobei der 2-alkyl- oder 2-Alkenylsubstituent hydrophob ist und das Derivat ein 1-Monocarboxylat, ein 1,1-Dicarboxylat oder ein 1-Monosulphonat ist.

2. Dispersion gemäss Anspruch 1, dadurch gekennzeichnet, dass der 2-Alkyl- oder 2-Alkenylsubstituent 7 bis 23 Kohlenstoffatome enthält.

3. Dispersion gemäss Anspruch 1 oder 2, dadurch gekennzeichnet, dass der Emulgator in der Dispersion in einer Menge von wenigstens 1 Gew.-%, bezogen auf die freie Radikale bildende Verbindung, vorhanden ist.

4. Dispersion gemäss einem der vorhergehenden Ansprüche, dadurch gekennzeichnet, dass sie auch 0,05 bis 10 Gew.-% eines Verdickungsmittels enthält.

5. Dispersion gemäss einem der vorhergehenden Ansprüche, dadurch gekennzeichnet, dass die feste monomerlösliche, freie Radikale bildende Verbindung ein organisches Peroxid ist.

6. Dispersion gemäss Anspruch 5, dadurch gekennzeichnet, dass die feste monomerlösliche, freie Radikale bildende Verbindung ein Peroxi-dicarbonat ist.

7. Verwendung einer wässrigen Emulgator enthaltenden Dispersion einer festen monomerlöslichen, freie Radikale bildenden Verbindung, welche Dispersion ein amphoteres Derivat eines 2-alkyl- oder 2-alkenyl-substitituierten 2-Imidazolins enthält, wobei der 2-Alkyl- oder 2-Alkenylsubstituent hydrophob ist und das Derivat ein 1-Monocarboxylat, ein 1,1-Dicarboxylat oder ein 1-Monosulphonat ist, als Emulgator für die Polymerisation von äthylenisch ungesättigten Monomeren in wässrigen Systemen.

**Revendications**

1. Dispersion aqueuse contenant un émulsifiant d'un composé solide soluble dans un monomère et formant des radicaux libres, caractérisée en ce que l'émulsifiant est un dérivé amphotère d'une 2-imidazoline substituée par 2-alkyle ou 2-alcényle, le substituant 2-alkyle ou 2-alcényle étant hydrophobe et le dérivé est un 1-monocarboxylate, un 1,1-dicarboxylate ou un 1-monosulfonate.

2. Dispersion selon la revendication 1, caractérisée en ce que le substituant 2-alkyle ou 2-alcényle contient de 7 à 23 atomes de carbone.

3. Dispersion selon la revendication 1 ou 2, caractérisée en ce que l'émulsifiant est présent dans la dispersion en une quantité d'au moins 1% en poids, rapportée au composé formant les radicaux libres.

4. Dispersion selon l'une quelconque des revendications 1 à 3, caractérisée en ce qu'elle contient également entre 0,05 et 10% en poids d'un épaississant.

5. Dispersion selon l'une quelconque des revendications 1 à 4, caractérisée en ce que le composé solide soluble dans un monomère et formant des radicaux libres, est un peroxyde organique.

6. Dispersion selon la revendication 5, caractérisée en ce que le composé solide soluble dans un monomère et formant des radicaux libres, est un peroxydicarbonate.

7. Utilisation d'une dispersion aqueuse contenant un émulsifiant, d'un composé soluble dans un

monomère et formant des radicaux libres, cette dispersion contenant un dérivé amphotère d'une 2-imidazoline substituée par 2-alkyle ou 2-alcényle, le substituant 2-alkyle ou 2-alcényle étant hydrophobe et le dérivé étant un 1-monocarboxylate, un 1,1-dicarboxylate ou un 1-monosulfonate, en tant qu'émulsifiant, pour la polymérisation dans des systèmes aqueux de monomères éthylèniquement insaturés.